# EUROPÄISCHE PATENTANMELDUNG

(11) **EP 1 233 346 A1**
(43) Veröffentlichungstag der Anmeldung: **21.08.2002**
(21) Anmeldenummer: 01103440.2
(22) Anmeldetag: 14.02.2001
(51) Int. Cl.: G06F 15/78, G06F 13/12

(54) **Netzwerk-Co-Prozessor für Kraftfahrzeuge**

(71) Anmelder: Micronas GmbH, 79108 Freiburg (DE)
(72) Erfinder: Franke, Jörg, Dipl.-Ing., 79117 Freiburg (DE)
(74) Vertreter: Sauer, Wolfgang, Dipl.-Ing.

(57) **Zusammenfassung**

Ein Netzwerkprozessor (1), der über eine Vielzahl von Netzwerknoten (10) mit externen Netzwerkeinrichtungen wie andere Prozessoren, Controller, Geber oder Sensoren unterschiedlichste Daten austauscht, enthält neben einem Hauptprozessor (13), der für eigentlichen Steueraufgaben des Prozessors vorgesehen ist, zur Unterstützung reiner Netzwerkaufgaben einen Netzwerk-Co-Prozessor (40). Der Entkopplung der beiden Aufgabenbereiche dient ferner ein erstes und zweites Bussystem (30, 35), das im wesentlichen dem Hauptprozessor (13) bzw. dem Netzwerk-Co-Prozessors (40) mit zugehörigen Funktionseinheiten, insbesondere "Data-Link-Layer-Speichereinrichtungen (20), zugeordnet ist. Dadurch ist es möglich, dass sowohl eine Unterstützung von Gateway-Funktionen als auch eine Unterstützung von Higher-Layer-Funktionen ermöglicht wird. "Higher-Layer-Speichereinrichtungen" (21), deren Messages letztlich der Hauptprozessor (13) sendet oder empfängt, sind vom Hauptprozessor (13) oder Netzwerk-Co-Prozessor (40) aus direkt oder indirekt über das über das erste und/oder zweite Bussystem (30, 35) zugänglich.

## Beschreibung

Die Erfindung betrifft einen Netzwerkprozessor für Kraftfahrzeuge. In Kraftfahrzeugen übernehmen zunehmend Mikroprozessoren, die im folgenden meist vereinfacht als Prozessoren bezeichnet werden, in Verbindung mit Gebern und Sensoren die unterschiedlichsten Steuer-, Überwachungs- und Anzeigefunktionen. Die räumlich weit auseinanderliegenden Mikroprozessoren, Geber und Sensoren, die miteinander Daten oder Signale austauschen, sind über standardisierte Kraftfahrzeugnetzwerke miteinander verbunden, deren aktive Datenschnittstellen über standardisierte Protokolle und Busleitungen den Datenverkehr abwickeln. Die Steuerung des Datenaustausches, also die Netzwerkmanagement-Aufgaben, übernehmen dabei die Mikroprozessoren über entsprechende Zusatzprogramme oder entsprechende Zusatzschaltungen. Die Bereiche des Mikroprozessors, die mit diesen zusätzlichen Soft- und Hardware-Einrichtungen die Netzwerkmanagement-Aufgaben bewältigen, werden in der folgenden Beschreibung durch den Begriff Netzwerkprozessor umschrieben.

Als Beispiele für Netzwerkstandards werden hier folgende bekannte Standards angegeben: "CAN-Netz" (=Controller-Array-Network), "K-Line-Interface-Netz" (=UART), "VAN-Netz", "J1850-Netz", "SPI-Netz" oder "TTP-Netz". Allen Netzen gemeinsam ist ein in der Regel meist zweiadriger Bus, über den die Informationen paketweise nach dem jeweils standardisierten Datenformat und Protokoll übertragen werden. Beim CAN-Netz enthält jedes Paket bis zu acht Worte zu je acht Bit und die Übertragung erfolgt seriell. Die Übertragungsrate ist an den Aufgabenbereich der zu übertragenden Daten angepaßt und erfolgt z.B mit einer Datenrate von 125 kBit/s bis 500 kBit/s. Daten mit niederer Datenrate und geringer Priorität betreffen beispielsweise die Klimaregelung während Daten mit hoher Datenrate und hoher Priorität beispielsweise das Brems- oder Schlupfverhalten der einzelnen Räder betreffen. Im Kraftfahrzeug können auch unterschiedliche Netze über einen oder mehrere Netzwerkprozessoren miteinander vermascht sein. Das ist möglich, wenn entsprechende Schnittstellen am Netzwerkprozessor vorgesehen sind. Diese Schnittstellen werden im allgemeinen als Netzwerkknoten oder vereinfacht nur als Knoten bezeichnet.

Es ist leicht einzusehen, daß im Falle mehrerer und auch noch unterschiedlicher Knoten die Steuerung des internen und externen Datenaustausches zur Übertragung der gewünschten "Messages" für jeden Prozessor kompliziert ist. Außer dem Datenformat kann nämlich auch noch die Datenrate unterschiedlich sein. Ferner ist beim Vorhandensein von mehr als zwei Knoten auch eine Prioritätssteuerung erforderlich, die den Konfliktfall beim gleichzeitigen Zugriff auf den Datenbus beseitigt. Daneben sind auch Vorkehrungen zu treffen, die eine Übertragung längerer Informationen ermöglichen, indem diese auf der Senderseite vor der Versendung in mehrere Pakete zerlegt und dann getrennt übertragen werden. Auf der Empfangsseite wird der Inhalt der Pakete entsprechend der zugehörigen Message wieder in richtiger Reihenfolge für die weitere Verarbeitung zusammengesetzt.

Die Durchführung dieser Steuerfunktionen erfolgt im wesentlichen über eine entsprechende Software die im jeweiligen Prozessor, in der Regel in den zugehörigen RAM/ROM-Speichern, enthalten ist. Die Software zeigt dabei eine aus drei Schichten aufgebaute Struktur, wobei die einzelnen Schichten (=layer) einem hierarchisch gegliederten Funktionsablauf der Datenübertragung entsprechen. Eine ausführliche Beschreibung eines derartigen Netzwerk- und Übertragungsstandards findet sich hierzu beispielsweise in der 105-seitigen Dokumentation der OSEK-Gruppe (= Open Systems and the Corresponding Interfaces for Automotive Electronics): "OSEK - Communication -Specification", Version 1.00, 11. September 1995, COM-Specification 1.00. Für die weitere Betrachtung reicht jedoch ein kurzer Aufriss auf diese drei Schichten aus.

Die unterste Schicht, die als "Data-Link-Layer" oder abgekürzt als "DLL" bezeichnet wird, hat direkt mit der Übertragung des paketförmigen Datenformats zu tun und bestimmt das zugehörige Datenformat, den Fehlerkorrekturgrad, löst im Konfliktfall die Priorität, wickelt das Übertragungsprotokoll ab und dergleichen mehr und steuert schließlich die als Netzwerkstreiber erforderliche Hardware im jeweiligen Knoten.

Die darüber liegende Schicht, die als "Transport-Layer" oder abgekürzt als "TL" bezeichnet wird, ermöglicht den Austausch von Daten, die wegen ihrer Länge nicht in einem einzigen Datenpaket untergebracht werden können. Hierbei wird auf der Senderseite ein Transportprotokoll erstellt, damit auf der Empfängerseite die einzelnen übertragenen Segmente zunächst gespeichert und dann in richtiger Reihenfolge wieder zusammengesetzt werden können. Die Anzahl der zusammengehörigen Segmente und andere wichtige Informationen, beispielsweise über die Art des Inhaltes, wird im Transportprotokoll ebenfalls festgehalten und übertragen. Das Gegenstück zu überlangen Informationen sind Kurzinformationen, beispielsweise die Übertragung von einem einzigem Bit, um ein spezielles Flag zu setzen. Damit das Netzwerk nicht für die gesamte Übertragungsdauer eines Pakets, z.B. mit 8 x 8 Bit Datenumfang, einschließlich der Header-Information, blockiert ist, kann mittels der "TL" auch eine Kurzmessage aktiviert werden.

Die Schicht mit der höchsten Hierarchiestufe ist die "Interaction-Layer", die abgekürzt auch mit "IL" bezeichnet wird. Sie stellt die Verbindung zu dem jeweiligen Applikationsprogramm dar und ist an dieses speziell angepaßt. Im Gegensatz zur Data-Link-Layer ist die Interaction-Layer unabhängig von dem jeweils an den Knoten angeschlossenen Bus oder Prozessor. Über die IL sind entweder statusorientierte oder ereignisbezogene Informationen übertragbar. Eventuell wird dabei die Transport-Layer übergangen, weil die Interactions-Layer auch direkt auf die Data-Link-Layer Zugriff hat. Die Transport-Layer und die Interactions-Layer werden daher meist auch als eine einzige Verarbeitungsschicht zusammengefasst, die als "Higher-Layer" bezeichnet wird.

Mit steigender Zahl der angeschlossenen Netzwerke und Knoten je Netz, steigt natürlich auch die Belastung der einzelnen Prozessoren durch reine Netzwerkaufgaben. Hat der jeweilige Prozessor auch Echtzeitaufgaben zu erfüllen, dann kann die Mehrbelastung durch das Netz kritisch werden. Bisherige Versuche, den Prozessor von Netzwerkaufgaben zu entlasten gehen in zwei Richtungen: nämlich die Unterstützung der "Gateway"-Funktionalität oder die Unterstützung der "Higher-Layer" Funktionen.

Unter einer Unterstützung der Gateway-Funktionalität wird eine Mehrfachausnutzung der den einzelnen Knoten zugeordneten RAM-Bereiche verstanden. Damit werden Messages innerhalb der Gateway überlappend mehreren Knoten zugeordnet, wobei durch eine geeignete Software dann rasch eine Message eines ersten Knotens zu einer Message eines anderen Knoten umdefiniert wird. Ein Beispiel für eine derartige Unterstützung ist in "Proceedings, ICC '97, 4^{th} international CAN Conference", Berlin, 1 und 2 Oktober, Seite 15-17 bis Seite 15-21, in dem Beitrag "Double-CAN Controlller as Bridge for Different CAN Networks" beschrieben.

Eine Unterstützung der Higher-Layer-Funktion ist beispielsweise mittels eines "Transport-Layer-Co-Prozessors" möglich, der den eigentlichen Prozessor von der Aufgabe entbindet, die Messages der Transport-Layer in die jeweiligen Knoten-Messages, also in die zugehörige DLL-Message, zu übersetzen. Gleichzeitig wird die Interrupt-Last des eigentlichen Prozessors verringert, da die Interrupts nicht mehr nach jeder Übertragung einer Knoten-Message, sondern nur noch nach Übertragung einer Transport-Layer-Message ausgelöst werden. Ein Beispiel für eine derartige Unterstützung ist in "Proceedings, ICC '99, 6^{th} international CAN Conference", Turin, 2 bis 4 November, Seite 09-27 bis Seite 09-33, in dem Beitrag "New Generation of CAN controller supporting Higher Layer Protocols" beschrieben.

Die Nachteile der bisherigen Lösungen sind ihre Begrenzungen entweder auf die Gateway-Funktionalität oder auf die Higher-Layer Protokolle, wodurch die Entlastung des Prozessors von Netzwerkaufgaben nicht befriedigend ist.

Es ist daher Aufgabe der Erfindung, einen verbesserten Netzwerkprozessor anzugeben, der von Netzwerksaufgaben stärker entlastet ist.

Die Lösung der Aufgabe erfolgt durch die im Anspruch 1 gekennzeichnete Erfindung, indem zwischen den eigentlichen Prozessor und die mit dem Netz verbundenen Netzwerkknoten ein Netzwerk-Co-Prozessor eingefügt wird, der die eigentliche Netzwerksteuerung über ein zusätzliches Bussystem übernimmt, das weitgehend unabhängig von dem im Prozessor bereits vorhandenen Bussystem ist.

Die Vorteile dieser Lösung bestehen darin, daß bei der Entlastung keinerlei Beschränkung auf einen bestimmten Netzwerkstandard besteht, denn der Zugriff des Netzwerk-Co-Prozessors auf die HL- und DLL-Netzwerkspeicher gilt für alle Knoten. Es sind ferner Erweiterungen der Betriebssystemunterstützung über die Interactions-Layer möglich. Über einen direkten Zugriff auf den Speicher des (Haupt)-Prozessors wird dessen effektive Performance verringert. Ferner kann die Fehlersicherung bei der Übertragung verbessert werden. Und schließlich ist eine Erweiterung von Diagnosefunktionen möglich.

Die Erfindung und vorteilhafte Weiterbildungen werden der Figuren der Zeichnung näher erläutert:
Fig. 1 zeigt als Blockschaltbild einen üblichen Mikroprozessor mit zugehörigen Funktionseinheiten zur Übernahme von Netzwerksaufgaben,
Fig. 2 zeigt ein erstes Ausführungsbeispiel der Erfindung mit einem Netzwerk-Co-Prozessor und zwei Bussystemen,
Fig. 3 zeigt ein zweites Ausführungsbeispiel, bei dem das HL-RAM dem Hauptprozessor zugeordnet ist,
Fig. 4 zeigt ein ähnliches Ausführungsbeispiel, bei dem das HL-RAM dem Netzwerk-Co-Prozessor zugeordnet ist, und
Fig. 5 zeigt schließlich ein Ausführungsbeispiel, das zur Entkopplung der Netzwerkaufgaben den Netzwerk-Co-Prozessor und drei Bussysteme enthält.

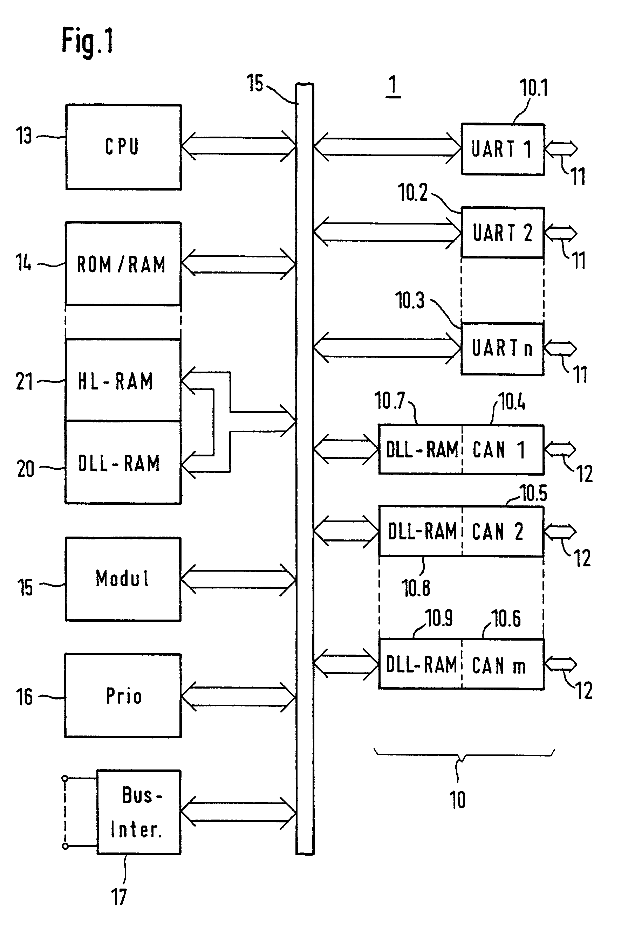

Fig. 1 zeigt im Blockschaltbild die Funktionseinheiten eines Mikroprozessors 1, der auch Netzwerksaufgaben übernehmen kann, die im Zusammenhang mit den über eine Vielzahl von Netzwerksknoten 10 auszutauschenden Daten anfallen. An die Netzwerksknoten 10 sind über externe Datenleitungen 11, 12 nicht dargestellte Mikroprozessoren, Sensoren, Geber und andere Daten- oder Signalquellen angeschlossen, die mit einer Mikroprozessoreinheit 13, auch CPU (= Central Processing Unit) genannt, unterschiedlichste Daten austauschen oder Daten dort hin liefern. Der Datenverkehr innerhalb des Mikroprozessors 1 zwischen den einzelnen Funktionsbausteinen erfolgt über einen zentralen Bus 15. Von den üblicherweise vorhandenen Funktionsbausteinen eines Mikroprozessors 1 sind der Übersichtlichkeit wegen im wesentlichen nur die Funktionsbausteine für die reinen Netzwerksaufgaben dargestellt.

Der Mikroprozessoreinheit 13 ist ein ROM/RAM 14 zugeordnet, das die fest vorgegebenen oder frei programmierbaren Programme für die CPU 13 enthält, die von der CPU bei Bedarf aufgerufen werden oder beim Systemstart von alleine starten. Ein Schaltungsblock 15 ist allgemein als "Modul" bezeichnet. Er soll die verschiedensten Funktionseinheiten symbolisieren, beispielsweise eine Fehlersicherung, ein Motorsteuerungsprogramm und dergleichen mehr. Eine Prioritätslogik 16 verhindert durch die Vorgabe von Prioritäten für die einzelnen Funktionsbausteine Konfliktsituationen auf dem Bus 15, wenn gleichzeitig mehrere Funktionseinheiten auf ihn zugreifen. Ein externes Bus-Interface 17 ermöglicht von außen den Zugriff auf den Bus 15. Die anderen Funktionseinheiten von Fig. 1 betreffen Funktionen im Zusammenhang mit dem Datenaustausch mit dem externen Netzwerk oder den verschiedenen externen Netzwerken.

Die in Fig. 1 dargestellten Netzwerkknoten 10 teilen sich in zwei Gruppen auf, die UART-Netzwerkknoten 10.1, 10.2, 10.3 und die CAN-Netzwerkknoten 10.4, 10.5, 10.6. Die UART-Netzwerkknoten, kurz als UART-Knoten bezeichnet, laufen in der Zählung von 1 bis n und die CAN-Netzwerkknoten, kurz als CAN-Knoten bezeichnet, laufen von 1 bis m. Knoten, die anderen Netzwerkstandards zuzurechnen sind, sind in Fig. 1 nicht dargestellt, sie wären auf gleiche Weise an den Bus 15 anzuschließen. Bei den CAN-Knoten 10.4 bis 10.6 ist jeweils ein DLL-RAM 10.7, 10.8, 10.9 vorgeschaltet, daß die über den CAN-Knoten auszugebenden oder empfangenen Daten zwischenspeichert und in der Regel als FIFO-Speicher (= First-In-First-Out) ausgeführt ist. Bei den UAT-Knoten 10.1 bis 10.3 kann dieser optionale Zwischenspeicher entfallen, da die zu übertragenden Daten in der Regel nur zwei Zustände aufweisen, die der jeweilige UAT-Knoten gegebenenfalls selbst speichert.

Das den CAN-Knoten 10.4 bis 10.6 vorgelagerte DLL-RAM enthält die bereits erwähnten DATA-Link- Messages oder zumindest ein Teil davon, während der andere Teil in dem eigentlichen DLL-RAM 20 gespeichert ist. Außer den DLL-Messages kann das RAM in einem anderen Speicherbereich 21 die Higher-Layer-Messages enthalten. In Fig. 1 sind diese beiden Bereiche 20, 21 daher zusammen dargestellt und über eine einzige Busverbindung mit dem zentralen Bus 15 verbunden. Der RAM-Bereich des Schaltungsblockes ROM/RAM 14 kann als weiterer Bereich zusammen mit den anderen Bereichen 20, 21 in einem gemeinsamen Schreib-Lesespeicher enthalten sein, was durch die gestrichelten Linien zwischen den Schaltungsblöcken 14 und 21 angedeutet ist.

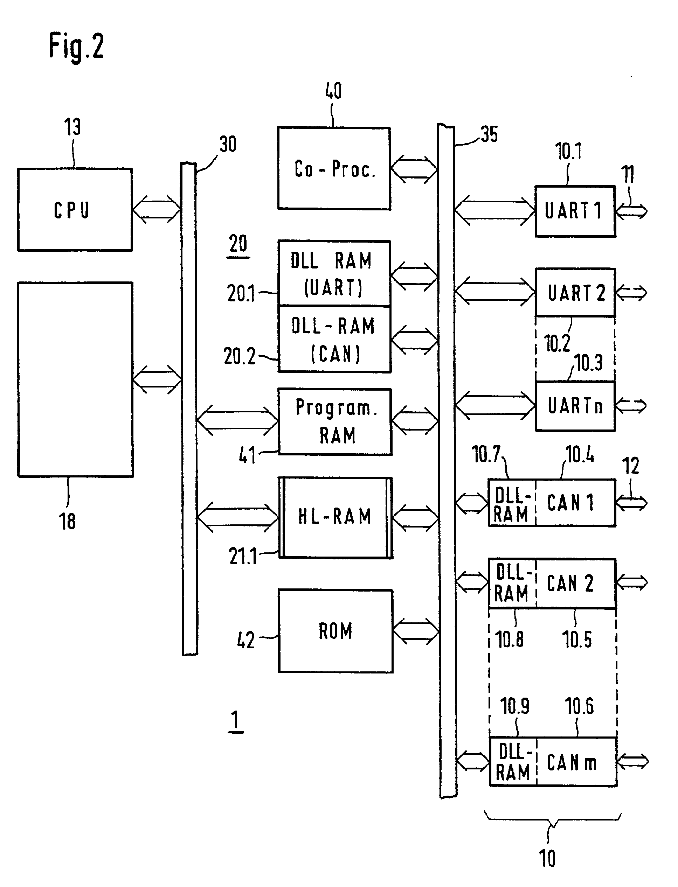

In Fig. 2 ist ein erstes Ausführungsbeispiel der Erfindung dargestellt. Der Übersichtlichkeit wegen sind Funktionseinheiten, die bereits in Fig. 1 beschrieben worden sind, mit den gleichen Bezugszeichen versehen. Eine nochmalige Erörterung ihrer Funktion erübrigt sich somit. Kleinere Varianten sind als Dezimalangaben den Bezugszeichen hinzugefügt und damit erkennbar. Der Mikroprozessor 1 von Fig. 2 enthält zwei Steuer- oder Recheneinheiten 13, 40. Einmal die bereits in Fig. 1 beschriebene CPU 13, die im folgenden als Hauptprozessor bezeichnet wird, und als neue Steuereinheit einen Netzwerk-Co-Prozessor 40, der im folgenden meist vereinfacht als Co-Prozessor bezeichnet wird und der die Netzwerkaufgaben übernimmt. Damit die Netzwerkaufgaben nicht in Konflikt mit den eigentlichen Aufgaben des Hauptprozessors 13 auf dem internen Bus geraten, enthält der Mikroprozessor 1 für die Netzwerkaufgaben ein zweites Bussystem 35, an das auch die Netzwerkknoten 10 angeschlossen sind.

Die Funktionseinheiten des Hauptprozessors 13, die nichts mit Netzwerkaufgaben zu tun haben, sind als Schaltungsblock 18 zusammengefaßt, der an das erste Bussystem 30 angeschlossen ist. An das erste Bussystem 30 ist ferner ein Eingang eines zweitorigen HL-RAM 21.1 angeschlossen, dessen anderes Tor mit dem zweiten Bussystem 35 verbunden ist. Ferner ist an das erste Bussystem 30 noch ein Programm-RAM 41 angeschlossen, daß spezielle Programme für den Co-Prozessor 40 enthält, die vom Hauptprozessor 13 über das erste Bussystem 30 dort hinein geladen werden. Das Programm-RAM 41 ist zur Kommunikation mit dem Co-Prozessor 40 auch an das zweite Bussystem 35 angeschlossen. Eine Zweitorfunktion ist hierbei aber nicht erforderlich, weil ein gleichzeitiger Zugriff von beiden Bussystem 30, 35 auf das Programm-RAM 41 vermeidbar ist.

Im Ausführungsbeispiel von Fig. 2 enthält das DLL-RAM 20 einen ersten Bereich 20.1 für die UART-Messages und einen zweiten Bereich 20.2 für die CAN-Messages. Schließlich ist an das zweite Bussystem 35 noch ein ROM 42 angeschlossen, das beispielsweise ein rasches Booten des Co-Prozessors 40 beim Systemstart ermöglicht.

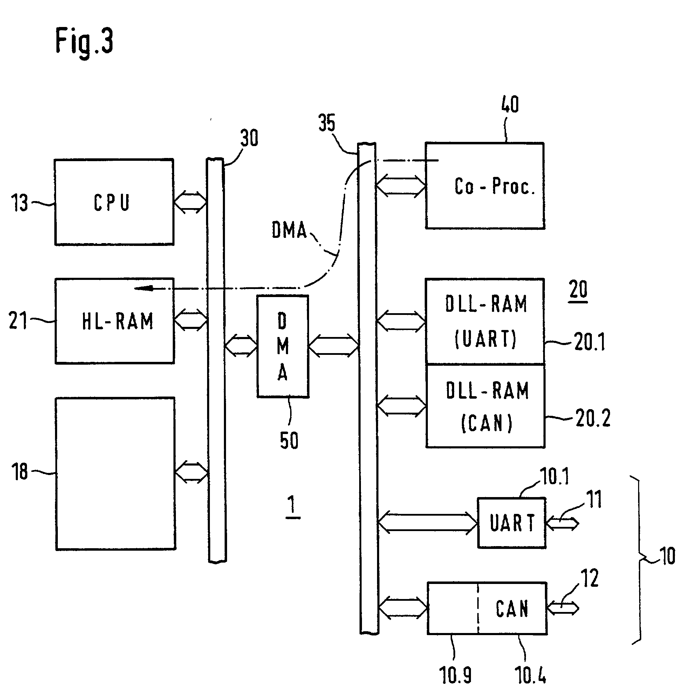

Die Schaltung von Fig. 3 ist gegenüber Fig. 2 in den vorhandenen Funktionseinheiten etwas vereinfacht. Der wesentliche Unterschied besteht darin, daß das HL-RAM 21 vom Co-Prozessor 40 nicht direkt über das zweite Bussystem 35 erreicht werden kann, denn der Datenpfad verläuft über das zweite und dann das erste Bussystem 35, 30. Die Verkoppelung beider Bussysteme erfolgt über eine Direktzugriffseinrichtung 50 (DMA=Direct-Memory-Access) zwischen dem zweiten und ersten Bussystem 35, 30. Über die DMA-Einrichtung 50 kann der Co-Prozessor 40 mit einer sehr hohen Priorität die Messages aus dem HL-RAM 21 abrufen - vergleiche den strichpunktierten Pfeil DMA in Fig. 3. Bei einem derartigen Abruf werden die aktuellen Funktionen des Hauptprozessors 13 allerdings unterbrochen.

Eine derartige Mikroprozessorarchitektur ist dann zweckmäßig, wenn der Inhalt des HL-RAM 21 ständig vom Hauptprozessor 13 angepaßt wird und die Abfragen durch den Co-Prozessor 40 demgegenüber relativ selten sind, so daß die Unterbrechungen des Hauptprogramms kaum in Erscheinung treten.

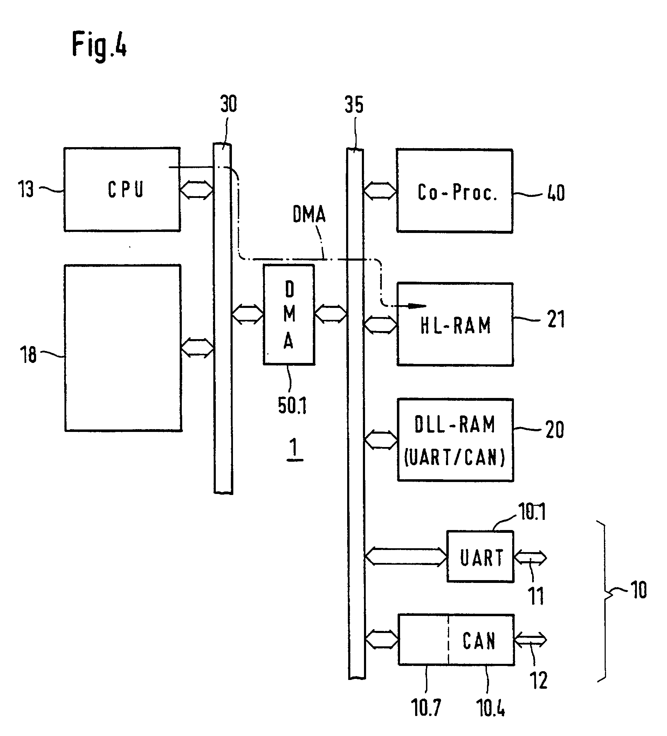

Das Blockschaltbild von Fig. 4 ist ähnlich wie das Blockschaltbild von Fig. 3 und enthält ebenfalls eine Direktzugriffseinrichtung 50.1. Diese arbeitet jedoch in die andere Richtung, also vom ersten Bussystem 30 zum zweiten Bussystem 35, weil das HL-RAM 21 in Fig. 4 an das zweite Bussystem 35 angeschlossen ist. Wenn der Hauptprozessor 13 auf die Messages im HL-RAM 21 zugreifen oder sie verändern will, dann schaltet er sich mittels der Direktzugriffseinrichtung 50.1 mit hoher Priorität auf das HL-RAM 21 durch und unterbricht die jeweilige Netzwerkfunktion des Co-Prozessors 40 - vergieiche den strickpunktierten Pfeil DMA in Fig. 4.

Diese Architektur und Anordnung des HL-RAM 21 ist dann sinnvoll, wenn der Hauptprozessor 13 nur selten auf das HL-RAM 21 zugreifen muß und andererseits der Co-Prozessor 40 eine hohe Datenzugriffsrate auf die Netzwerkknoten 10 aufweist.

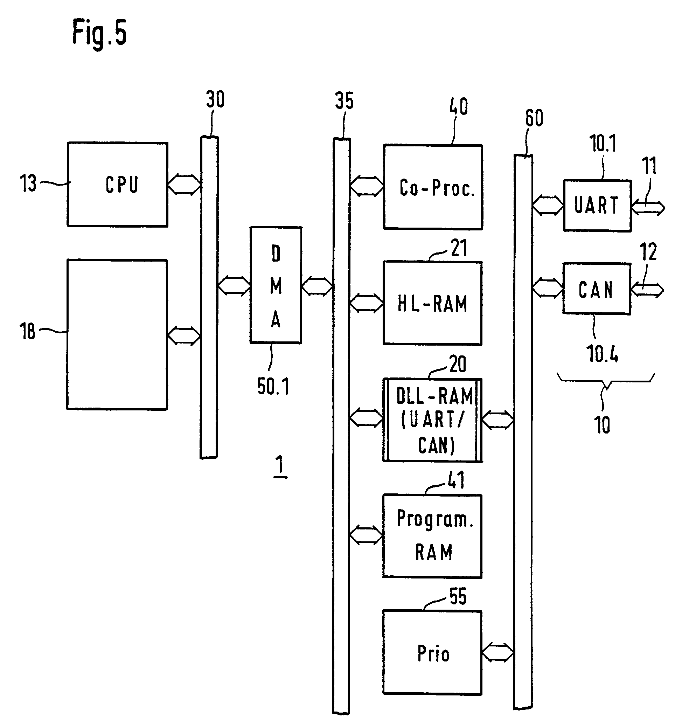

Fig. 5 stellt eine Variante der Schaltungsanordnung von Fig. 4 dar. Die wesentliche Änderung besteht in einem dritten Bussystem 60, an das von den Netzwerk-Funktionseinheiten lediglich die Netzwerkknoten 10, das DLL-RAM 20 und als neuen Schaltungsblock eine Prioritätslogik 55 angeschlossen sind. Die anderen Funktionseinheiten wie der Co-Prozessor 40, das HLL-RAM 21, das Programm-RAM 41, die Direktzugriffseinheit 50.1 sowie der zweite Ein/Ausgang des DLL-RAM 20 sind an das zweite Bussystem 35 angeschlossen. Die Prioritätslogik 55 ist erforderlich, weil der Co-Prozessor 40 nicht direkt mit dem dritten Bussystem 60 verbunden ist und somit bei mehrfachem Zugriff von Netzwerkknoten 10, die Konfliktsteuerung nicht übernehmen kann. Ein Vorteil dieser Anordnung ist, daß die Knoten 10 keine eigene DLL-RAM 10.7 bis 10.9 (vgl. Fig. 1) erfordern, weil das DLL-RAM 20 über das dritte Bussystem 60 gleichsam direkt an die einzelnen Knoten 10.1, 10.4 angeschlossen ist. Mit dieser Anordnung ist leicht eine Mehrfachausnutzung einzelner DLL-RAM-Bereiche möglich, indem mehrere Knoten 10 mit einer einzigen DLL-Message verknüpfbar sind weil die Messages identisch sind.

In der Beschreibung enthaltene Bezeichnungen sind nicht als beschränkend anzusehen. Die Angabe von ROM und RAM schließt selbstverständlich andere Speicherarten nicht aus, beispielsweise die zunehmende Verwendung von löschbaren Speichern, z.B. "Flash"-Speichern, als Schreib-und-Lesespeicher, weil derartige Speicher die gespeicherte Information auch im im spannungslosen Zustand nicht verlieren. Für Aufgaben, bei denen die Spannungsversorgung nicht durchgehend gewährleistet ist, sind derartige Speicher von großem Vorteil. Im Kraftfahrzeug findet sich beispielsweise ein derartiger Anwendungsbereich, denn selbst bei einem batterieschonenden stand-by-Betrieb muss gelegentlich die Batterie gewechselt werden.

Betriebsdaten über Kilometerstand, vorgenommene Inspektionen usw. dürfen dabei nicht verloren gehen. Die Trennung der Netzfunktionen von den eigentlichen Prozessoraufgaben erlaubt auch ein sicheres Ablegen derartiger Daten in gesicherten Speicherbereichen des Hauptprozessors, die nicht auf einfache Weise zugänglich oder gar manipulierbar sind.

## Patentansprüche

1. Netzwerkprozessor (1) enthaltend:
- einen Hauptprozessor (13) und einen mit Netzwerkknoten verkoppelten Netzwerk-Co-Prozessor (40),
- ein erstes Bussystem (30), das im wesentlichen dem Hauptprozessor (13) zugeordnet ist und auch der Ankoppelung des Netzwerk-Co-Prozessors (40) dient,
- ein zweites Bussystem (35), das im wesentlichen dem Netzwerk-Co-Prozessor zugeordnet ist und auch der Ankopplung der einzelnen Netzwerkknoten (10) dient,
- ein erster Netzwerkspeicher(20) mit einem Speicherbereich für erste Layer-Messages (DLL), der dem zweiten Bussystem (35) zugeordnet ist und der für die zugehörigen Netzwerkknoten (10) die zu lesenden oder zu schreibenden Messages enthält,
- ein zweiter Netzwerkspeicher (21) mit einem Speicherbereich für zweite Layer-Messages (HL), der die Informationen enthält, die der Umsetzung der zu lesenden oder zu schreibenden ersten Layer-Messages dienen, wobei der zweite Netzwerkspeicher (21) entweder
-- dem ersten Bussystem (30) zugeordnet ist und eine erste Direktzugriffseinrichtung (50) zwischen dem zweiten und ersten Bussystem (35 bzw. 30) einen direkten und damit raschen Zugriff des Netzwerk-Co-Prozessors (40) auf den zweiten Netzwerkspeicher (21) ermöglicht, oder
dem zweiten Bussystem (35) zugeordnet ist und eine zweite Direktzugriffseinrichtung (50.1) zwischen dem ersten und zweiten Bussystem (35 bzw. 30) einen direkten und damit raschen Zugriff des Hauptprozessors auf den zweiten Netzwerkspeicher ermöglicht.

2. Netzwerkprozessor (1) nach Anspruch 1, **dadurch gekennzeichnet, daß** die Direktzugriffseinrichtung (50.1) durch eine Zweitorausbildung des zweiten Netzwerkspeichers (21.1) ersetzt ist, wobei das erste Tor an das erste Bussystem (30) und das zweite Tor an das zweite Bussystem (35) angeschlossen sind.

3. Netzwerkprozessor (1) nach Anspruch 1 oder 2, **dadurch gekennzeichnet, dass** mindestens einige der Netzwerksknoten (10) einen eigenen Speicherbereich (10.7, 10.8, 10.9) aufweisen, der den zugehörigen Bereich des ersten Netzwerkspeichers (20) ganz oder teilweise ersetzt.

4. Netzwerkprozessor (1) nach einem der Ansprüche 1 oder 3, **dadurch gekennzeichnet, dass** ein drittes Bussystem (60) vorhanden ist, an das die Netzwerkknoten (10) und mit einem ersten Eingang-Ausgang der erste Netzwerkspeicher (20) angeschlossen sind, wobei der zweite Eingang-Ausgang des Netzwerkspeichers (20) mit dem zweiten Bussystem (35) verbunden ist.

5. Netzwerkprozessor (1) nach Anspruch 4, **dadurch gekennzeichnet, dass** eine mit dem dritten Bussystem (60) verbundene Prioritätslogik (55) der Konfliktlösung bei gleichzeitigem Zugriff von mehr als einem Netzwerkknoten (10) auf das dritte Bussystem (60) dient.
